Europäisches Patentamt

**European Patent Office**

**Office européen des brevets**

(11) Numéro de publication : **0 019 025**
**B1**

# (12) FASCICULE DE BREVET EUROPÉEN

(45) Date de publication du fascicule du brevet :
**15.12.82**

(21) Numéro de dépôt : **79400320.2**

(22) Date de dépôt : **22.05.79**

(51) Int. Cl.³ : **C 08 F 10/02**, C 08 F 2/00

(54) **Procédé de fabrication de polyéthylène à faible consommation d'énergie et appareil pour la mise en oeuvre dudit procédé.**

(43) Date de publication de la demande :
**26.11.80 (Bulletin 80/24)**

(45) Mention de la délivrance du brevet :
**15.12.82 Bulletin 82/50**

(84) Etats contractants désignés :
**AT BE CH DE GB IT LU NL SE**

(56) Documents cités :
**EP A 0 009 283**
**FR A 2 062 562**
**FR A 2 313 399**

(73) Titulaire : **Société Chimique des Charbonnages**
**Tour Aurore Place des Reflets Cedex no 5**
**F-92080 Paris La Défense 2 (FR)**

(72) Inventeur : **Jouffroy, Guy**
**Pavillon no 27 Les Bosquets St Arnoult**
**F-76490 Caudebec En Caux (FR)**
Inventeur : **Martinot, Bernard**
**Le Toupin no 14**
**F-76170 Lillebonne (FR)**

(74) Mandataire : **Dubost, Thierry**
**Société Chimique des Charbonnages Service Propriété Industrielle B.P. No 1**
**F-62160 Bully Les Mines (FR)**

Jouve, 18, rue St-Denis, 75001 Paris, France

# Procédé de fabrication de polyéthylène à faible consommation d'énergie et appareil pour la mise en œuvre dudit procédé

La présente invention concerne un procédé de fabrication du polyéthylène à faible consommation d'énergie, et en particulier un procédé pour récupérer la majeure partie de la chute enthalpique disponible entre le réacteur de polymérisation et le séparateur dans lequel le polyéthylène est séparé de l'éthylène.

On sait que depuis le renchérissement de l'énergie, la réduction de la consommation d'énergie est devenue une préoccupation prioritaire de l'industrie. Malgré cela, bien peu d'efforts ont été consacrés jusqu'ici à diminuer la consommation d'énergie dans les installations de fabrication de polyéthylène dont la réaction se déroule sous très haute pression, généralement supérieure à 800 bars environ. Pourtant la chute enthalpique disponible entre cette pression de réaction et la pression de séparation généralement inférieure à 400 bars n'est habituellement pas récupérée. Le brevet français n° 2 062 562 décrit un procédé pour comprimer un fluide pour obtenir un produit consistant à utiliser plusieurs dispositifs à moteurs pour comprimer le fluide, à envoyer le fluide dans le système pour sa compression par ces dispositifs, à envoyer au moins un constituant dans le système pour l'addition au fluide, à communiquer de l'énergie au fluide et au constituant pour provoquer la formation du produit à partir d'une partie du fluide, à alimenter des dispositifs donnés du système avec l'énergie emmagasinée dans le fluide comprimé, et à séparer le produit du reste du fluide. Ledit procédé est présenté comme s'appliquant à la fabrication du polyéthylène et comporte l'idée de récupération d'énergie, néanmoins il ne permet de fournir que jusqu'à 50 % de l'énergie nécessaire pour la compression du fluide et d'autre part les moyens pratiques pour la réalisation industrielle de ce procédé et les conditions de fonctionnement de ces moyens ne sont pas décrits. Enfin ce procédé comporte une restriction notoire consistant à utiliser toute l'énergie récupérée à l'intérieur de l'installation de fabrication du polyéthylène.

La présente invention vise donc à définir un procédé de fabrication du polyéthylène dans lequel la majeure partie de la chute enthalpique disponible entre le réacteur de polymérisation et le séparateur est récupérée de manière à être utilisable indépendamment de l'installation de polymérisation et dans lequel les moyens de récupération de la chute enthalpique assurent simultanément un refroidissement du mélange issu du réacteur avant son entrée dans le séparateur.

L'invention consiste donc en un procédé de fabrication de polyéthylène dans au moins un réacteur sous une pression de 800 à 2 500 bars et à une température de 150° à 350 °C, dans lequel le mélange sortant du réacteur à travers une vanne de détente est envoyé vers un séparateur sous pression de 50 à 400 bars et subit un refroidissement entre la vanne et le séparateur, caractérisé en ce que ledit refroidissement est obtenu en faisant passer au moins une partie du mélange sortant du réacteur à travers une turbine constituée d'au moins un étage comprenant successivement une tuyère fixe et une roue à ailettes de vitesse de rotation comprise entre 12 000 et 40 000 tours par minute, le mélange sortant du dernier étage de la turbine étant envoyé vers le séparateur. Lorsque la turbine utilisée dans le procédé selon l'invention comporte un seul étage, la tuyère de cette turbine doit avoir une section au col S telle que, P étant la pression du mélange sortant du réacteur et entrant dans la turbine selon un débit Q, $Q/S = P + 230/2\,160$ (P étant exprimé en bars, Q en tonnes par heure et S en millimètres carrés). Quel que soit le nombre d'étages, les roues de la turbine peuvent avoir des diamètres différents, bien que des diamètres identiques constituent la solution la plus simple ; en tout état de cause, ces diamètres seront choisis de manière telle que la vitesse périphérique de la roue soit toujours comprise entre 100 et 450 m/s. Enfin, conformément à l'objet de l'invention, la turbine peut être avantageusement reliée, par l'intermédiaire d'un réducteur de vitesse, à un générateur électrique animé d'une vitesse de rotation de 3 000 tours par minute pour la production de courant industriel ; ce moyen permet d'utiliser indépendamment de l'installation de polymérisation la chute enthalpique récupérée.

Le choix des turbines utilisables dans le cadre de l'invention est rendu délicat par la nature du mélange véhiculé entre le réacteur et séparateur, qui en fin de détente est constitué d'éthylène et de gouttelettes de polyéthylène. Ce choix ne peut se faire par analogie avec les turbines à vapeur, car dans le cas d'un mélange de vapeur et de gouttelettes d'eau le rapport des densités est d'environ 1 000 alors que dans les conditions de température et de pression régnant entre réacteur de polymérisation et séparateur le rapport des densités est variable mais toujours inférieur à 5 environ. Cependant, plusieurs types de turbines peuvent être utilisés dans le cadre de l'invention. Toutes ces turbines comportent évidemment un rotor sur lequel on ne reviendra plus par la suite. Pour la terminologie s'appliquant à ces machines, on se réfère ici à Perry's Chemical Engineering Handbook (4e Édition — 1963) pages 24-70 et 24-77, et Techniques de l'Ingénieur, Mécanique et Chaleur, Vol. 2, pages B 310-1 à B 322-9 et B 460-1 à B 462-17 (1965).

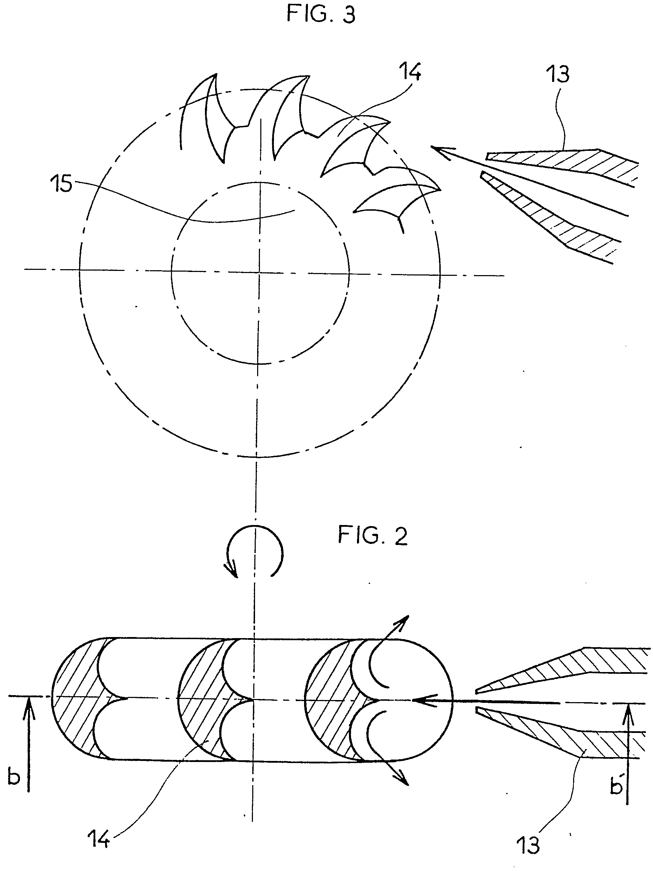

Le premier type de turbine utilisable dans le cadre de l'invention est une turbine radiale centripète ayant un degré de réaction inférieur ou égal à 50 %, souvent désignée sous le nom de turbine Francis et qui pourra comporter un ou plusieurs étages, de préférence de 4 à 12 étages. Cette turbine est représentée schématiquement sur la figure 2 et, en coupe selon l'axe b-b' de celle-ci, la figure 3. Sur ces figures, 13 désigne la tuyère, 14 une ailette de la roue et 15 le rotor.

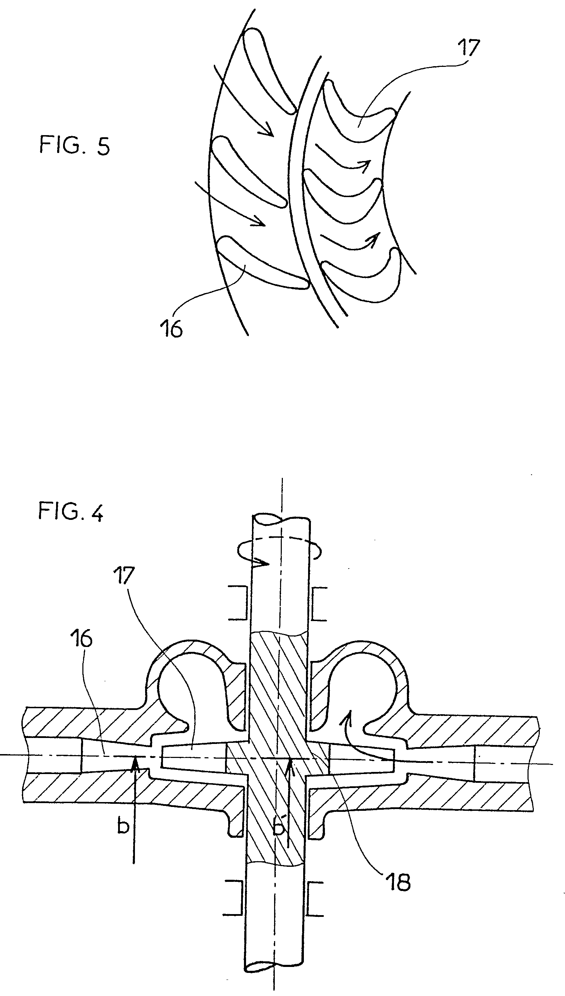

Le second type de turbine utilisable dans le cadre de l'invention est une turbine à jet unique quasi radial, souvent désignée sous le nom de turbine Pelton ; dans ce type de machine, le jet de mélange issu de la tuyère se situe dans un plan perpendiculaire à l'axe de la roue mais non concourant avec ledit axe. Cette turbine est représentée schématiquement sur la figure 4 et, en coupe selon l'axe b-b' de celle-ci, la figure 5. Sur ces figures, 16 désigne la tuyère, 17 une ailette de la roue et 18 le rotor.

Le troisième type de turbine utilisable dans le cadre de l'invention est une turbine axiale à action ; pour celle-ci, qui peut comporter un ou plusieurs étages, l'angle d'injection du mélange par rapport à la roue sera de préférence inférieur à 30 degrés. Dans l'utilisation d'une turbine du second ou du troisième type précités, il pourra être avantageux d'admettre le mélange sur une partie seulement des ailettes de la roue, cette technique étant désignée sous le terme d'injection partielle.

La tuyère de turbine utilisée dans le cadre de l'invention est de préférence une tuyère de type convergent-divergent dont la section S' de sortie du divergent est dans un rapport S'/S à la section au col compris entre 1 et 2. Elle peut être rectangulaire ou de révolution. Il peut être avantageux d'utiliser une tuyère à géométrie variable, telle qu'une tuyère de révolution munie intérieurement d'une tige à embout conique engagée dans le col et commandée par un servomoteur hydraulique ; ce système permet de régler directement le débit d'alimentation de la turbine et même, en engageant la tige à fond jusqu'à ce que le cône vienne faire étanchéité sur le col, de couper rapidement et complètement le débit du fluide moteur comme l'imposent les réglementations de sécurité en cas de rupture mécanique. Egalement pour des raisons de sécurité, la turbine selon l'invention comporte de préférence au moins un détecteur de survitesse incorporé capable de provoquer la fermeture en un temps très court, par exemple compris entre 0,01 et 0,1 seconde, de la vanne située à la sortie du réacteur.

Dans le procédé selon l'invention, le débit Q de mélange passant dans la turbine ne représente pas forcément la totalité du débit sortant du réacteur. Cependant afin de réaliser l'objectif de l'invention consistant à récupérer la majeure partie de la chute enthalpique disponible entre réacteur et séparateur et afin d'utiliser la turbine dans les meilleurs conditions d'efficacité, il est nécessaire que ce débit Q représente une part importante, de préférence au moins 60 %, du débit sortant du réacteur.

La partie restante du mélange, représentant jusqu'à 40 % du débit sortant du réacteur, est acheminée par un circuit disposé en parallèle de la turbine depuis la sortie du réacteur jusqu'au séparateur, soit directement à travers une vanne de détente soit à travers un injecteur d'éthylène froid selon la technique décrite dans le brevet français n° 2 313 399, ce qui permet d'obtenir à l'entrée du séparateur un refroidissement supplémentaire du mélange. Bien évidemment la proportion du mélange admise dans cet injecteur peut devoir être modifiée dans le temps en fonction des conditions de polymérisation ou à l'occasion d'un arrêt de service de la turbine et il est donc prévu de régler l'admission du mélange dans l'injecteur au moyen d'une vanne. L'éthylène froid alimentant ledit injecteur est soit capté, en aval d'un échangeur de calories, sur le circuit de recyclage reliant le séparateur au compresseur assurant l'alimentation du réacteur en éthylène, soit alimenté directement à partir d'un circuit de distribution d'éthylène à la pression désirée. Dans les deux cas il est avantageux, pour des raisons énergétiques, que la pression d'injection de l'éthylène froid soit la plus basse possible ; cette pression sera de préférence comprise entre 20 et 180 bars.

Enfin selon une variante de l'invention on fait passer le débit Q de mélange sortant du dernier étage de la turbine, avant de l'envoyer vers le séparateur, à travers un injecteur d'éthylène froid afin d'effectuer un refroidissement supplémentaire du mélange. L'injecteur utilisé pourra être du type convergent-divergent décrit dans le brevet français n° 2 313 399 et sera alimenté comme indiqué précédemment.

Le procédé selon l'invention est applicable à la polymérisation de l'éthylène sous des pressions élevées comprises entre 800 et 2 500 bars au moyen d'un initiateur de radicaux libres ou bien au moyen d'un système catalytique de type Ziegler. L'invention est aussi applicable à la copolymérisation de l'éthylène avec les $\alpha$-oléfines telles que propylène, butène-1 ou hexène-1.

Lorsqu'on emploie un initiateur de radicaux libres, l'invention est applicable à la copolymérisation de l'éthylène avec des comonomères polaires tels que l'oxyde de carbone, l'anhydride maléique, les esters vinyliques.

De manière parfaitement connue, on pourra aussi employer dans le procédé de l'invention un ou plusieurs agents de transfert de chaîne, tel que par exemple l'hydrogène, pour régler et contrôler les caractéristiques du polymère. Le mélange réactionnel pourra encore comporter de 1 à 50 % en poids d'un diluant inerte tel que, par exemple, un hydrocarbure aliphatique.

Par initiateur de radicaux libres, on doit entendre l'oxygène, les peroxydes et les peresters. Un système catalytique de type Ziegler utilisable dans le cadre du procédé selon l'invention comprend d'une part au moins un activateur choisi parmi les hydrures et les composés organométalliques des métaux des groupes I à III de la Classification Périodique et d'autre part au moins un composé halogéné d'un métal de transition des groupes IV à VI A. Parmi ces composés, on peut citer les trichlorures de vanadium et de titane (ce dernier éventuellement syncristallisé avec le chlorure d'aluminium sous la forme $TiCl_3, 1/3 AlCl_3$) éventuellement fixés sur un support comprenant par exemple un halogénure, un monohalogénure ou un hydrohalogénure de magnésium. Le temps de séjour moyen de l'initiateur ou du système catalytique dans le réacteur, généralement compris entre 5 et 80 secondes environ, sera choisi par l'homme de l'art en fonction de la température dudit réacteur et sera d'autant plus court que cette température sera plus élevée. Ces catalyseurs sont de préférence employés sous forme de solutions dans un diluant inerte ou bien sous forme de dispersion.

Le procédé de l'invention est mis en œuvre de façon continue en utilisant un réacteur autoclave agité ou bien un réacteur tubulaire.

La présente invention concerne donc aussi un appareil pour effectuer la polymérisation de l'éthylène, comprenant un réacteur, une turbine située à la sortie dudit réacteur et constituée d'au moins un étage comprenant successivement une tuyère fixe et une roue à ailettes, un séparateur situé à la sortie du dernier étage de ladite turbine et comportant à sa base un conduit d'évacuation du polymère, un circuit de recyclage d'éthylène reliant le séparateur à l'entrée du compresseur et un conduit reliant la sortie dudit compresseur à l'entrée du réacteur.

Lorsqu'on ne fait pas passer la totalité du débit sortant du réacteur à travers la turbine, l'appareil selon l'invention comprend également un circuit disposé en parallèle de ladite turbine depuis la sortie du réacteur jusqu'à l'entrée du séparateur et comprenant une vanne de détente. Dans ce dernier cas, l'appareil selon l'invention peut encore comporter un injecteur comprenant une buse d'éjection formant l'extrémité d'un conduit provenant de la vanne de détente, une zone de mélange convergente en aval de ladite buse d'éjection et reliée à une source d'éthylène froid, et un diffuseur constituant l'extrémité aval de ladite zone de mélange et relié à l'entrée du séparateur. De manière énergétiquement avantageuse, la zone de mélange dudit injecteur est raccordée, par l'intermédiaire d'un échangeur de calories et éventuellement d'une vanne de détente, au circuit de recyclage d'éthylène.

Enfin selon un autre mode de réalisation, l'appareil selon l'invention peut également comporter une injecteur tel que celui décrit précédemment et disposé entre la sortie du dernier étage de la turbine et l'entrée du séparateur.

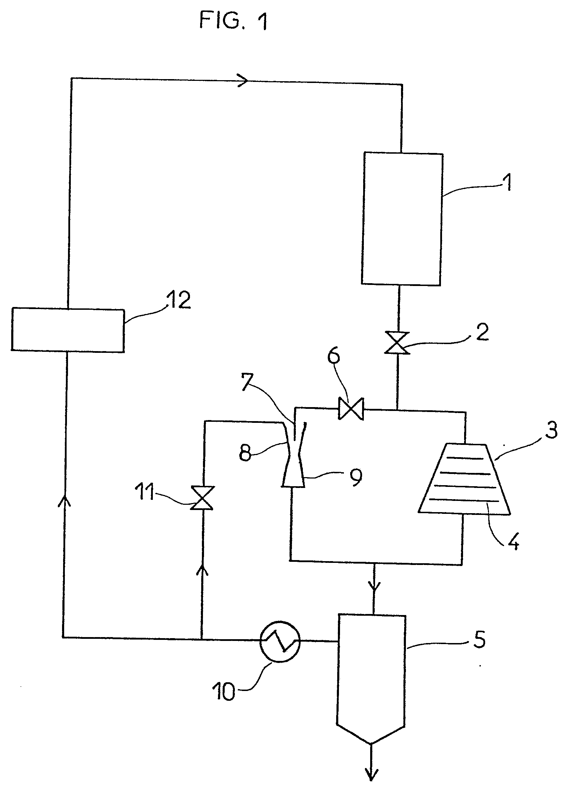

La figure 1 représente schématiquement un mode de réalisation de l'appareil selon l'invention. Cet appareil comprend donc le réacteur 1, dont la sortie est reliée à la turbine 3 par l'intermédiaire d'une vanne de détente 2. La turbine 3 comprend plusieurs étages 4 et est reliée à l'entrée du séparateur 5. Celui-ci comporte à sa base un conduit d'évacuation du polymère. A partir d'un point situé entre la vanne 2 et la turbine 3 un conduit en dérivation mène, à travers une vanne 6, à la buse d'éjection 7 d'un injecteur comprenant en outre une zone convergente 8 en aval de la buse 7 et un diffuseur 9 constituant l'extrémité de la zone 8. Le diffuseur 9 est raccordé au conduit reliant la turbine 3 au séparateur 5. La sortie des gaz du séparateur 5 est reliée par l'intermédiaire d'un échangeur de calories 10 à l'entrée du compresseur 12 dont la sortie est reliée à l'entrée du réacteur 1. A la sortie de l'échangeur 10, un conduit en dérivation rejoint la zone convergente 8 à travers une vanne 11.

**Revendications**

1. Procédé de fabrication de polyéthylène par polymérisation de l'éthylène dans au moins un réacteur sous une pression de 800 à 2 500 bars et à une température de 150° à 350 °C, dans lequel le mélange sortant du réacteur à travers une vanne de détente est envoyé vers un séparateur sous pression de 50 à 400 bars et subit un refroidissement entre la vanne et le séparateur, procédé selon lequel la majeure partie de la chute enthalpique disponible entre le réacteur de polymérisation et le séparateur est récupérée, caractérisé en ce que ledit refroidissement est obtenu en faisant passer au moins une partie du mélange sortant du réacteur à travers une turbine constituée d'au moins un étage comprenant successivement une tuyère fixe et une roue à ailettes de vitesse de rotation comprise entre 12 000 et 40 000 tours par minute, le mélange sortant du dernier étage de la turbine étant envoyé vers le séparateur.

2. Procédé selon la revendication 1, caractérisé en ce que la turbine comporte un seul étage dont la section au col S de la tuyère est telle que, P étant la pression du mélange sortant du réacteur et entrant dans la turbine selon un débit Q, $Q/S = P + 230/2\,160$, P étant exprimé en bars, S en millimètres carrés et Q en tonnes par heure.

3. Procédé selon l'une des revendications 1 et 2, caractérisé en ce que la vitesse périphérique de chaque roue de la turbine est comprise entre 100 et 450 m/s.

4. Procédé selon l'une des revendications 1 à 3, caractérisé en ce que la turbine est une turbine radiale centripète ayant un degré de réaction inférieur ou égal à 50 %.

5. Procédé selon la revendication 4, caractérisé en ce que la turbine comporte de 4 à 12 étages.

6. Procédé selon l'une des revendications 1 à 3, caractérisé en ce que la turbine est une turbine à jet unique quasi radial.

7. Procédé selon l'une des revendications 1 à 3, caractérisé en ce que la turbine est une turbine axiale à action.

8. Procédé selon la revendication 7, caractérisé en ce que l'angle d'injection du mélange par rapport à la roue est inférieur à 30 degrés.

9. Procédé selon l'une des revendications 6 à 8, caractérisé en ce qu'on fait passer le mélange sur une partie seulement des ailettes de la roue de l'étage de turbine.

10. Procédé selon l'une des revendications 1 à 9, caractérisé en ce que la tuyère est une tuyère de type convergent-divergent dont la section S' de sortie du divergent est dans un rapport S'/S à la section au col compris entre 1 et 2.

11. Procédé selon l'une des revendications 1 à 10, caractérisé en ce que la tuyère de la turbine est une tuyère de révolution à géométrie variable.

12. Procédé selon la revendication 11, caractérisé en ce que la tuyère est munie intérieurement d'une tige à embout conique engagée dans le col et commandée par un servomoteur hydraulique pour régler le débit Q.

13. Procédé selon l'une des revendications 1 à 12, caractérisé en ce que le débit Q passant dans la turbine représente au moins 60 % du débit sortant du réacteur et en ce que le débit complémentaire est acheminé depuis la sortie du réacteur jusqu'au séparateur par un circuit disposé en parallèle de la turbine.

14. Procédé selon la revendication 13, caractérisé en ce que le débit complémentaire est acheminé à travers un injecteur d'éthylène froid, l'admission du débit complémentaire de mélange dans ledit injecteur étant réglée au moyen d'une vanne, et l'éthylène froid alimentant ledit injecteur étant capté en aval d'un échangeur de calories sur le circuit de recyclage reliant le séparateur au compresseur assurant l'alimentation du réacteur en éthylène.

15. Procédé selon l'une des revendications 1 à 14, caractérisé en ce qu'on fait passer le débit Q de mélange sortant du dernier étage de la turbine, avant de l'envoyer vers le séparateur, à travers un injecteur d'éthylène froid capté en aval d'un échangeur de calories sur le circuit de recyclage reliant le séparateur au compresseur assurant l'alimentation du réacteur en éthylène.

16. Procédé selon l'une des revendications 14 et 15, caractérisé en ce que l'éthylène froid est injecté sous une pression de 20 à 180 bars.

17. Appareil pour effectuer la polymérisation de l'éthylène comprenant un réacteur, une turbine située à la sortie dudit réacteur et constituée d'au moins un étage comprenant successivement une tuyère fixe et une roue à ailettes, un séparateur situé à la sortie du dernier étage de ladite turbine et comportant à sa base un conduit d'évacuation du polymère, un circuit de recyclage d'éthylène reliant le séparateur à l'entrée d'un compresseur et un conduit reliant la sortie dudit compresseur à l'entrée du réacteur.

18. Appareil selon la revendication 17, caractérisé en ce que la turbine est une turbine radiale centripète ayant un degré de réaction inférieur ou égal à 50 % et comportant de 4 à 12 étages.

19. Appareil selon la revendication 17, caractérisé en ce que la turbine est une turbine axiale à action dont la roue fait avec la direction d'injection du mélange un angle inférieur à 30 degrés.

20. Appareil selon la revendication 17, caractérisé en ce que la turbine est une turbine Pelton à jet unique quasi radial.

21. Appareil selon l'une des revendications 17 à 20, caractérisé en ce que la tuyère de la turbine est une tuyère de type convergent-divergent dont la section S' de sortie du divergent est dans un rapport S'/S à la section au col compris entre 1 et 2.

22. Appareil selon l'une des revendications 17 à 21, caractérisé en ce que la tuyère de la turbine est une tuyère de révolution à géométrie variable munie intérieurement d'une tige à embout conique engagée dans le col et commandée par un servo-moteur hydraulique.

23. Appareil selon l'une des revendications 17 à 22, caractérisé en ce qu'il comprend également un circuit disposé en parallèle de la turbine depuis la sortie du réacteur jusqu'à l'entrée du séparateur et comprenant une vanne de détente.

24. Appareil selon la revendication 23, caractérisé en ce qu'il comporte en outre un injecteur comprenant une buse d'éjection formant l'extrémité d'un conduit provenant de la vanne de détente, une zone de mélange convergente en aval de ladite buse d'éjection et reliée à une source d'éthylène froid, et un diffuseur constituant l'extrémité aval de ladite zone de mélange et relié à l'entrée du séparateur.

25. Appareil selon l'une des revendications 17 à 24, caractérisé en ce qu'il comporte en outre, disposé entre la sortie du dernier étage de la turbine et l'entrée du séparateur, un injecteur comprenant une buse d'éjection formant l'extrémité d'un conduit provenant du dernier étage de la turbine, une zone de mélange convergente en aval de ladite buse d'éjection et reliée à une source d'éthylène froid et un diffuseur constituant l'extrémité aval de ladite zone de mélange et relié à l'entrée du séparateur.

26. Appareil selon l'une des revendications 24 et 25, caractérisé en ce que la zone de mélange de l'injecteur est raccordée, par l'intermédiaire d'un échangeur de calories et éventuellement d'une vanne de détente, au circuit de recyclage d'éthylène.

**Claims**

1. A process for the manufacture of polyethylene by polymerizing ethylene in at least one reactor under a pressure of 800 to 2,500 bars and at a temperature of 150° to 350 °C, in which the mixture leaving the reactor through an expansion valve is supplied to a separator under a pressure of 50 to 400 bars undergoes cooling between said valve and said separator, whereby the major part of the enthalpy decrease available between the polymerisation reactor and the separator is recovered, characterized in that said cooling is effected by passing at least part of the mixture leaving the reactor through a turbine consisting of at least one stage successively comprising a fixed nozzle and a bladed wheel having a rotation speed of between 12,000 and 40,000 revolutions per minute, the mixture leaving the last stage of said turbine being supplied to said separator.

2. A process according to claim 1, characterized in that the turbine comprises a single stage, and wherein the neck cross-section S of the nozzle of said turbine is such that, P being the pressure of the mixture leaving the reactor and entering the turbine with a flow Q,

$Q/S = P + 230/2$ 160, P being expressed in bars, S in square millimetres and Q in metric tons per hour.

3. A process according to any of claims 1 and 2, characterized in that the peripherical speed of each wheel of the turbine is between 100 and 450 m/second.

4. A process according to any of claims 1 to 3, characterized in that the turbine is a radial-inflow turbine having a reaction ratio which is less than or equal to 50 %.

5. A process according to claim 4, characterized in that the turbine comprises from 4 to 12 stages.

6. A process according to any of claims 1 to 3, characterized in that said turbine is a single quasi-radial jet turbine.

7. A process according to any of claims 1 to 3, characterized in that said turbine is an axial-flow impulse turbine.

8. A process according to claim 7, characterized in that the angle of injection of the mixture, relative to said bladed wheel, is less than 30 degrees.

9. A process according to any of claims 6 to 8, characterized in that the mixture is passed onto only some of the blades on the wheel of the turbine stage.

10. A process according to any of claims 1 to 9, characterized in that said nozzle is of the convergent-divergent type, in which the outlet cross-section S' of the divergent part is in a ratio S'/S to the neck cross-section between 1 and 2.

11. A process according to any of claims 1 to 10, characterized in that the nozzle of the turbine is a body of revolution of variable area.

12. A process according to claim 11, characterized in that the nozzle is provided internally with a conical-tipped rod engaged in the neck of said nozzle and controlled by a hydraulic servomotor in order to regulate the flow Q.

13. A process according to any of claims 1 to 12, characterized in that the flow Q passing through the turbine represents at least 60 % of the flow leaving the reactor and in that the remaining part of the mixture is led through a line arranged in parallel with the turbine from the outlet of the reactor to the separator.

14. A process according to claim 13, characterized in that the remaining part of the mixture is led to the separator through a cold ethylene injector, admission of said remaining part of the mixture into said injector being regulated by means of a valve, and cold ethylene feeding said injector being taken, downstream of a heat exchanger, from the recycle line extending from the separator to a compressor provided for supplying the reactor with ethylene.

15. A process according to any of claims 1 to 14, characterized in that the flow Q of mixture leaving the last stage or the turbine is passed, before it is supplied to the separator, through a cold ethylene injector, the cold ethylene feeding said injector being taken, downstream of a heat exchanger, from the recycle line extending from the separator to a compressor provided for supplying the reactor with ethylene.

16. A process according to any of claims 14 and 15, characterized in that cold ethylene is injected under a pressure between 20 to 180 bars.

17. A device for polymerizing ethylene, comprising a reactor, a turbine arranged at the outlet of said reactor and consisting of at least one stage successively comprising a fixed nozzle and a bladed wheel, a separator disposed at the outlet of the last stage of said turbine and comprising an outlet at its lower end for discharging the polymer, an ethylene recycle line extending from the separator to the inlet of a compressor and a line extending from the outlet of said compressor to the inlet of the reactor.

18. A device according to claim 17, characterized in that the turbine is an axial-inflow turbine having a reaction ratio less than or equal to 50 % and comprising from 4 to 12 stages.

19. A device according to claim 17, characterized in that the turbine in an axial-flow impulse turbine, the wheel of which makes with the injection direction of the mixture an angle less than 30 degrees.

20. A device according to claim 17, characterized in that the turbine is a Pelton turbine having a single quasi-radial jet.

21. A device according to any of claims 17 to 20, characterized in that the nozzle of the turbine is of the convergent-divergent type, of which the outlet cross-section S' of the divergent part is in a ratio S'/S to the neck cross-section between 1 and 2.

22. A device according to any of claims 17 to 21, characterized in that the nozzle of the turbine is a body of revolution of variable area and provided internally with a conical-tipped rod engaged in the neck of said nozzle and controlled by a hydraulic servomotor.

23. A device according to any of claims 17 to 22, characterized in that it further comprises a line arranged in parallel with said turbine from the outlet of the reactor of the separator and comprising an expansion valve.

24. A device according to claim 23, characterized in that it further comprises an injector comprising a convergent ejection nozzle arranged at the end of the line extending from said expansion valve, a convergent mixing zone downstream from said ejection nozzle and connected to a cold ethylene supply means, and a diffuser at the downstream end of said mixing zone and connected of the separator inlet.

25. A device according to any of claims 17 to 24, characterized in that it further comprises, arranged between the outlet of the last stage of the turbine and the inlet of the separator, an injection comprising a convergent ejection nozzle arranged at the end of the line extending from said expansion valve, a convergent mixing zone downstream from said ejection nozzle and connected to a cold ethylene supply means, and a diffuser at the downstream end of said mixing zone and connected to the separator inlet.

26. A device according to any of claims 24 and 25, characterized in that the mixing zone of said injector is connected, through a heat exchanger and eventually an expansion valve, to the ethylene recycle line.

## Ansprüche

1. Verfahren zur Herstellung von Polyäthylen durch Polymerisation von Äthylen in mindestens einem Reaktor unter einem Druck von 800 bis 2 500 bar und bei einer Temperatur von 150° bis 350 °C, bei welchem die aus dem Reaktor über ein Druckminderventil austretende Mischung zu einem unter einem Druck von 50 bis 400 bar stehenden Separator geführt und zwischen dem Ventil und dem Separator einer Kühlung unterworfen wird, wobei der Großteil der zwischen dem Polymerisationsreaktor und dem Separator verfügbaren Abhitze rückgewonnen wird, dadurch gekennzeichnet, daß die genannte Kühlung dadurch erzielt wird, daß zumindest ein Teil der vom Reaktor austretenden Mischung durch eine Turbine hindurchtreten gelassen wird, die von wenigstens einer aufeinanderfolgend eine feststehende Düse und ein mit einer Drehgeschwindigkeit zwischen 12.000 und 40.000 U/min rotierendes Flügelrad aufweisenden Stufe gebildet ist, und die aus der letzten Stufe der Turbine austretende Mischung zum Separator geführt wird.

2. Verfahren nach Anspruch 1, dadurch gekennzeichnet, daß die Turbine eine einzige Stufe enthält, deren Querschnitt am Düsenhals S derart ist, daß, wenn P der Druck der mit einem Durchsatz Q aus dem Reaktor austretenden und in die Turbine eintretenden Mischung ist, $Q/S = P + 230/2\,160$, wobei P in bar, S in mm$^2$ und Q in t/h ausgedrückt sind.

3. Verfahren nach Anspruch 1 oder 2, dadurch gekennzeichnet, daß die Umfangsgeschwindigkeit jedes Rades der Turbine zwischen 100 und 450 m/s beträgt.

4. Verfahren nach einem der Ansprüche 1 bis 3, dadurch gekennzeichnet, daß die Turbine eine radiale Zentripetalturbine ist, die einen Reaktionsgrad von weniger als oder gleich 50 % besitzt.

5. Verfahren nach Anspruch 4, dadurch gekennzeichnet, daß die Turbine 4 bis 12 Stufen enthält.

6. Verfahren nach einem der Ansprüche 1 bis 3, dadurch gekennzeichnet, daß die Turbine eine Turbine mit einem einzigen quasiradialen Strahl ist.

7. Verfahren nach einem der Ansprüche 1 bis 3, dadurch gekennzeichnet, daß die Turbine eine axiale Aktionsturbine ist.

8. Verfahren nach Anspruch 7, dadurch gekennzeichnet daß der Winkel 35 der Einspritzung der Mischung in bezug auf das Rad geringer als 30° ist.

9. Verfahren nach einem der Ansprüche 6 bis 8, dadurch gekennzeichnet, daß die Mischung nur auf einen Teil der Flügel des Rades der Turbinenstufe geführt wird.

10. Verfahren nach einem der Ansprüche 1 bis 9, dadurch gekennzeichnet, daß die Düse eine eingezogene Düse ist, wobei der Austrittsquerschnitt S′ des divergierenden Teils der Düse in einem Verhältnis S′/S zum Querschnitt am Düsenhals zwischen 1 und 2 steht.

11. Verfahren nach einem der Ansprüche 1 bis 10, dadurch gekennzeichnet, daß die Düse der Turbine eine Rotationsdüse mit veränderlicher Geometrie ist.

12. Verfahren nach Anspruch 11, dadurch gekennzeichnet, daß die Düse im Inneren mit einer in den Düsenhals eingesteckten Stange mit konischem Ansatz versehen ist, die durch einen hydraulischen Servomotor steuerbar ist, um den Durchsatz Q einzustellen.

13. Verfahren nach einem der Ansprüche 1 bis 12, dadurch gekennzeichnet, daß der die Turbine passierende Durchsatz Q mindestens 60 % des Reaktordurchsatzes ausmacht, und daß der Komplementäre Durchsatz nach dem Austreten aus dem Reaktor durch einen parallel zur Turbine angeordneten Kreis bis zum Separator geführt wird.

14. Verfahren nach Anspruch 13, dadurch gekennzeichnet, daß der Komplementäre Durchsatz durch einen Injektor für Äthylen geführt wird, wobei der Eintritt des komplementären Durchsatzes der Mischung in den genannten Injektor mit Hilfe eines Ventils geregelt wird, und das den Injektor speisende kalte Äthylen stromab eines Wärmetauschers des den Separator mit dem die Speisung des Reaktors mit Äthylengewährleistenden Kompressor verbindenden Rückführkreises aufgefangen wird.

15. Verfahren nach einem der Ansprüche 1 bis 14, dadurch gekennzeichnet, daß der aus der letzten Stufe der Turbine austretende Durchsatz Q der Mischung, bevor er zum Separator geführt wird, durch einen Injektor für kaltes Äthylen geführt wird, das stromab eines Wärmetauschers des den Separator mit dem die Speisung des Reaktors mit Äthylen gewährleistenden Kompressor verbindenden Rückführkreises aufgefangen wird.

16. Verfahren nach Anspruch 14 oder 15, dadurch gekennzeichnet, daß das kalte Äthylen unter einem Druck von 20 bis 180 bar eingespritzt wird.

17. Vorrichtung zur Polymerisation von Äthylen, mit einem Reaktor, einer am Ausgang des Reaktors angeordneten und mindestens aus einer aufeinanderfolgend eine feststehende Düse und ein Flügelrad enthaltenden Stufe bestehenden Turbine, einem am Ausgang der letzten Stufe der genannten Turbine angeordneten Separator, der an seiner Basis eine Polymer-Evakuierungsleitung besitzt, einen Äthylen-Rückführkreis, der den Separator mit dem Eingang eines Kompressors verbindet, und einer den Ausgang des genannten Kompressors mit dem Eingang des Reaktors verbindenden Leitung.

18. Vorrichtung nach Anspruch 17, dadurch gekennzeichnet, daß die Turbine eine radiale Zentripetalturbine ist, die einen Reaktionsgrad von weniger als oder gleich 50 % besitzt und 4 bis 12 Stufen enthält.

19. Vorrichtung nach Anspruch 17, dadurch gekennzeichnet, daß die Turbine eine axiale Aktionsturbine ist, deren Rad mit der Einspritzrichtung der Mischung einen Winkel unterhalb 30° einschließt.

20. Vorrichtung nach Anspruch 17, dadurch gekennzeichnet, daß die Turbine eine Pelton-Turbine mit einem einzigen quasiradialem Strahl ist.

21. Vorrichtung nach einem der Ansprüche 17 bis 20, dadurch gekennzeichnet, daß die Düse der Turbine eine eingezogene Düse ist, wobei der Austrittsquerschnitt S' des divergierenden Teils der Düse in einem Verhältnis S'/S zum Querschnitt am Düsenhals zwischen 1 und 2 liegt.

22. Vorrichtung nach einem der Ansprüche 17 bis 21, dadurch gekennzeichnet, daß die Düse der Turbine eine Rotationsdüse mit veränderlicher Geometrie ist, welche im Inneren mit einer in den Düsenhals eingesteckten Stange mit konischem Ansatz versehen ist, die durch einen hydraulischen Servomotor steuerbar ist.

23. Vorrichtung nach einem der Ansprüche 17 bis 22, dadurch gekennzeichnet, daß sie auch einen sich vom Ausgang des Reaktors bis zum Eingang des Separators erstreckenden, zur Turbine parallel liegenden Kreis besitzt, der ein Druckminderventil enthält.

24. Vorrichtung nach Anspruch 23, dadurch gekennzeichnet, daß sie weiters einen Injektor mit einer Blasdüse, die das Ende einer vom Druckminderventil kommenden Leitung bildet, einer stromab der genannten Blasdüse liegenden konvergierenden Mischzone, die mit einer Quelle für kaltes Äthylen verbunden ist, und einem das stromab gelegene Ende der Mischzone bildenden und mit dem Eingang des Separators verbundenen Diffusor enthält.

25. Vorrichtung nach einem der Ansprüche 17 bis 24, dadurch gekennzeichnet, daß sie weiters einen zwischen dem Ausgang der letzten Stufe der Turbine und dem Eingang des Separators angeordneten Injektor besitzt, der eine das Ende einer von der letzten Stufe der Turbine kommenden Leitung bildende Blasdüse, eine stromab der Blasdüse liegende und mit einer Quelle für kaltes Äthylen verbundene Mischzone und einen das stromab gelegene Ende der genannten Mischzone bildenden, mit dem Eingang des Separators verbundenen Diffusor enthält.

26. Vorrichtung nach Anspruch 24 oder 25, dadurch gekennzeichnet, daß die Mischzone des Injektors über einen Wärmetauscher und gegebenenfalls ein Druckminderventil an den Äthylen-Rückführkreis angeschlossen ist.

FIG. 1

FIG. 3

14

13

15

FIG. 2

b

14

13

b´

FIG. 5

17

16

FIG. 4

17

16

b

18